# EUROPÄISCHE PATENTSCHRIFT

(11) **EP 0 766 420 B1**
(45) Veröffentlichungstag und Bekanntmachung des Hinweises auf die Patenterteilung: **05.06.2002**
(21) Anmeldenummer: 96114023.3
(22) Anmeldetag: 02.09.1996
(51) Int. Cl.: H04J 3/06

(54) **Verfahren zur Synchronisation auf eine Folge von digitalen Datenwerten und Schaltungsanordnung zur Durchführung des Verfahrens**
Method and circuit for the detection of a synchronisation pattern
Procédé et circuit pour la détection des motifs de synchronisation

(30) Priorität: 29.09.1995 DE 19536453
(43) Veröffentlichungstag der Anmeldung: 02.04.1997
(73) Patentinhaber: Infineon Technologies AG, 81669 München (DE)
(72) Erfinder: Rebmann, Volkmar, 81541 München (DE); Solanti, Petri, 85567 Grafing (DE); Müller, Karsten, 81373 München (DE)
(74) Vertreter: Reinhard - Skuhra - Weise & Partner

(56) Entgegenhaltungen:
- EP-A- 0 091 061
- EP-A- 0 550 169
- EP-A- 0 564 385

## Beschreibung

Verfahren zur Synchronisation auf eine Folge von digitalen Datenwerten und Schaltungsanordnung zur Durchführung des Verfahrens

Die Erfindung betrifft ein Verfahren zur Synchronisation auf eine Folge von digitalen Datenwerten nach dem Oberbegriff des Patentanspruchs 1. Die Erfindung betrifft außerdem eine Schaltungsanordnung zur Durchführung des Verfahrens.

Bei der Übertragung eines digitalen Datenstroms ist empfängerseitig eine Synchronisation auf die Datenorganisation, beispielsweise in Paketen und Bytes, notwendig. Im digitalen Datenstrom sind hierzu spezielle Bitmuster beispielsweise am Anfang eines Datenpakets enthalten. Zur Synchronisation auf die Struktur des Datenstroms ist es notwendig, diese Synchronkennungen mit dem vorgegebenen Abstand im Datenstrom zu erkennen.

Dem Anmelder ist hierzu ein Verfahren bekannt, bei dem nach dem Auftreten einer ersten Synchronisationskennung im Datenbitstrom die Anzahl der den Abstand zweier Synchronisationskennungen bildenden empfangenen Datenbits gezählt wird. Wenn nach dieser Anzahl von Datenbits wieder eine Synchronkennung vorliegt, zeigt dies an, daß der Synchronrahmen gefunden ist.

Problematisch ist, daß auch innerhalb der für die Dateninformation vorgesehenen Abschnitte des Datenstroms das spezielle Bitmuster der Synchronkennung auftreten kann. Andererseits kann ein Synchronisationsbitmuster durch Störungen, beispielsweise durch den Übertragungskanal, verändert werden, so daß es nicht mehr ohne weiteres erkannt werden kann. In beiden Fällen wird der Synchronisationsvorgang verlängert. Während der Nicht-Synchronisation gehen die jeweiligen Datenpakete verloren.

In der Patentschrift DE-C1-44 29 595 sind ein Verfahren und eine Schaltungsanordnung zur Erkennung des Rahmenanfangs eines rahmensynchronisierten Signals beschrieben. Der Rahmenanfang ist durch eine vorgegebene Bitfolge gekennzeichnet; innerhalb des Rahmens an einer bestimmten Rahmenposition ist eine zweite vorgegebene Bitfolge vorgesehen. Die Schaltung enthält Mittel, um die erste und zweite vorgegebene Bitfolge festzustellen. Ein Rahmenzähler wird aktiviert, wenn die erste Bitfolge erkannt wird, und zählt bis zur Rahmenposition, an der die zweite Bitfolge vorgesehen ist. Der Synchronrahmen wird dann als erkannt festgestellt, wenn nach dem Feststellen der ersten Bitfolge die zweite Bitfolge an der vorgegebenen Rahmenposition erkannt wird. Darüberhinaus ist vorgesehen, die Rahmenerkennung erst dann als erfüllt anzusehen, wenn mehrfach die erste und zweite Bitfolge im vorgegebenen Abstand zueinander auftreten.

Die Aufgabe der Erfindung besteht darin, ein Verfahren zur Synchronisation auf eine Folge von digitalen Datenwerten, die in Abstand von einer vorgegebenen Anzahl von Datenwerten je eine Synchronkennung enthält, anzugeben, durch das die Folge der Synchronkennungen schneller erkannt wird und der Synchronisationszustand schneller hergestellt wird. Eine weitere Aufgabe besteht in der Angabe einer Schaltungsanordnung zur Durchführung des Verfahrens.

Erfindungsgemäß wird die Aufgabe betreffend das Verfahren durch ein Verfahren nach den Merkmalen des Patentanspruchs 1 gelöst.

Eine Schaltungsanordnung zur Durchführung des Verfahrens ist in Patentanspruch 5 angegeben.

Beim erfindungsgemäßen Verfahren werden mindestens zwei Zählvorgänge parallel ausgeführt. Dadurch werden mehrere mögliche Folgen von Synchronisationsbitmustern zeitlich parallel daraufhin überprüft, ob tatsächlich eine Synchronisationsbitmusterfolge vorliegt. Die jeweiligen Zähl- und Überprüfungsvorgänge arbeiten einander entsprechend. Die Sicherheit bei der Synchronerkennung kann dadurch erhöht werden, daß Synchronisation erst dann festgestellt wird, wenn mehrere Synchronkennungen im vorgegebenen Paketabstand erkannt worden sind. Zweckmäßigerweise wird hierzu ein Zähler aufwärts gezählt, wenn im Abstand der vorgegebenen Anzahl von Datenwerten jeweils ein Synchronbitmuster erkannt wird, und abwärts gezählt, wenn ein solches im vorgegebenen Abstand nicht erkannt wird. Wenn der Zählerstand einen Schwellwert überschreitet, zeigt dies an, daß die Synchronisationsbitmusterfolge erkannt worden ist.

Nachfolgend wird die Erfindung anhand des in der Zeichnung dargestellten Ausführungsbeispiels näher erläutert. Es zeigen:
- Figur 1: einen Bitstrom mit darin enthaltenen Synchronbitmustern sowie den Zeitverlauf der Zählvorgänge von Datenbits und Synchronbitmustern,
- Figur 2: ein Prinzipschaltungsbild für die Realisierung einer Vorrichtung zur Durchführung des Verfahrens und
- Figur 3: ein Realisierungsbeispiel für eine der in der Figur 2 enthaltenen Synchronisationsteilschaltungen.

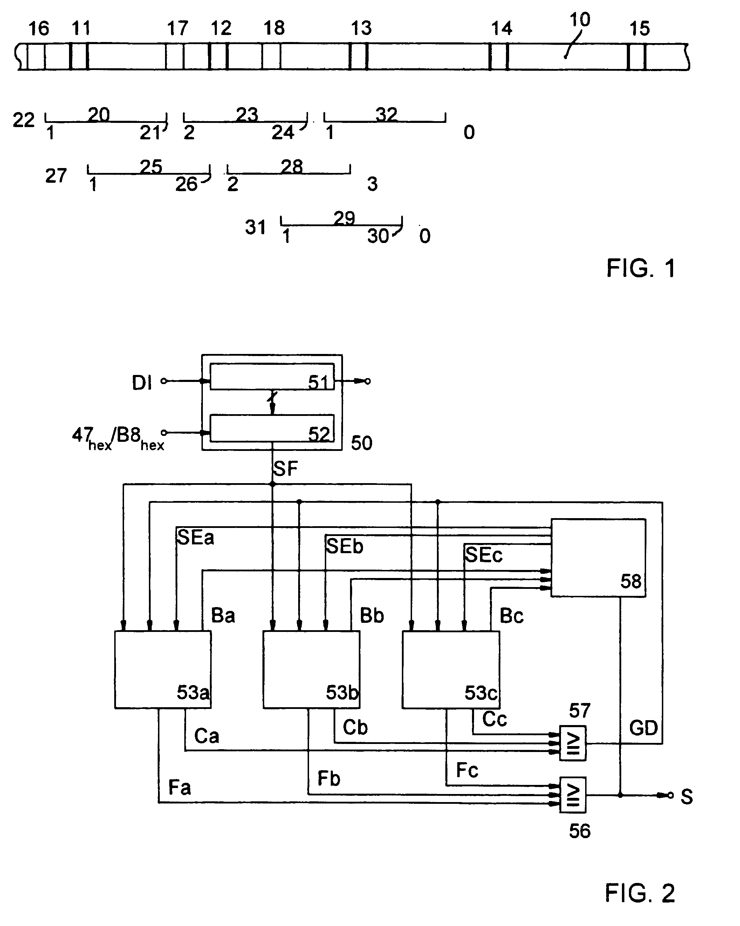

Die Figur 1 enthält einen Datenstrom 10, der eine Vielzahl von digitalen Datenwerten (Bits) enthält. Beispielsweise enthält der Datenstrom nach dem MPEG-Standard zur Übertragung von digitalen Bilddaten kodierte und formatierte Information. Der Datenstrom 10 weist in äquidistanten Abständen Synchronbitmuster 11...15 auf. Das Bitmuster ist fest vorgegeben und dem Empfänger bekannt, beispielsweise 47ₕₑₓ oder B8ₕₑₓ. Zwischen zwei Synchronkennungen liegt eine vorgegebene Anzahl von Datenbits vor. Diese umfaßt im angegebenen Beispiel 203 Datenbytes (zu je 8 Bit). Innerhalb der Datenabschnitte können bedingt durch die zu übertragende Information auch Abschnitte vorliegen, die das Bitmuster der Synchronkennung (47ₕₑₓ/B8ₕₑₓ) aufweisen. Statistische Gleichverteilung vorausgesetzt treten im Mittel 6,375 Synchronkennungen im Datenteil eines Pakets auf. In Figur 1 sind dies die Bitstromabschnitte 16, 17, 18, wobei der Abstand zwischen den Abschnitten 16 und 17 zufälligerweise ebenfalls dem Abstand entspricht, der zwischen zwei Sychronkennungen vorgesehen ist, und wobei zwischen den Abschnitten 17, 18 ein anderer Abstand vorliegt.

Das erfindungsgemäße Verfahren dient dazu, den empfangenen Datenbitstrom auf das Vorliegen des Sychronbitmusters zu überprüfen. Hierzu wird ein Fenster von der Länge der Synchronkennung von 8 Bit über den Datenbitstrom geführt und überprüft, ob die Synchronbitfolge 47ₕₑₓ oder B8ₕₑₓ vorliegt. Gegebenenfalls kann der Vergleich auch dann als erfüllt angesehen werden, wenn innerhalb des Fensters von 8 Bit eine Übereinstimmung in weniger als diesen 8 Bit vorliegt. Der Synchronisationsvorgang kann dadurch zwar verlängert werden, der Schaltungsaufwand und die Rechengeschwindigkeit werden aber erhöht. Die Anzahl der Bits, die innerhalb des Überprüfungsfensters mit dem Synchronbitmuster übereinstimmen müssen, damit der Vergleich als erfüllt gilt, hängt von der Art der empfangenen Daten und den Anforderungen an die Synchronisation in bezug auf Realisierungsaufwand und -geschwindigkeit ab und ist dementsprechend einzustellen.

In dem in der Figur 1 gezeigten Beispiel wird im Datenstrom 10 erstmals im Abschnitt 16 das Synchronbitmuster erkannt. Hierfür wird ein erster Überprüfungsvorgang 22 durchgeführt, um festzustellen, ob das Bitmuster 16 einer fortlaufenden Folge von tatsächlichen Synchronbitmustern angehört. Hierzu wird ein erster Zählvorgang 20 gestartet, der diejenige Anzahl von empfangenen Datenbits abzählt, die festlegungsgemäß zwischen zwei Synchronbitmustern vorliegt, also die Rahmenoder Paketlänge, gegebenenfalls verringert um die Bitanzahl der Synchronkennung selbst. Der Zählvorgang wird an der Stelle 21 beendet. Dann wird überprüft, ob an dieser Stelle ein Bitmuster vorliegt, das der Synchronkennung entspricht. Tatsächlich wird im Abschnitt 17 des Datenstroms 10 wiederum die Synchronbitkennung festgestellt. Außerdem wird in einem Übereinstimmungszählvorgang gezählt, wie oft das Synchronbitmuster im vorgegeben Abstand auftritt. Ein entsprechender Übereinstimmungszähler wird beim Auftreten des Bitmusters 16 auf "1" gesetzt und beim Auftreten des Bitmusters 17 weiter auf "2" inkrementiert. Im Zählvorgang 23 wird wiederum der festlegungsgemäße Abstand zweier Synchronkennungen abgezählt. An der Stelle 24 wird der Datenstrom 10 auf das Vorliegen des Synchronbitmusters überprüft. Im gezeigten Beispiel liegt nun aber im Datenstrom 10 kein Synchronbitmuster vor. Im Übereinstimmungszählvorgang wird der Zähler daraufhin auf "1" dekrementiert. Nach einem weiteren Zählvorgang 32 wird im Datenstrom 10 wiederum kein Synchronbitmuster erkannt. Der Übereinstimmungszähler wird nun auf seinen Ausgangszustand "0" dekrementiert. Dies bedeutet, daß die Folge der (zufällig) dem Synchronbitmuster entsprechenden Abschnitte 16, 17 des Datenstroms 10 keine tatsächliche Synchronbitmusterfolge ist, bei der ja das Synchronbitmuster fortlaufend auftreten müßte. Vielmehr sind die Bitmusterabschnitte 16, 17 Abschnitte des Dateninhalts der Datenpakete, die zufälligerweise das Bitmuster der Synchronkennung aufweisen.

Während des Zählvorgangs 20 wird der Datenstrom 10 weiterhin fortlaufend auf das Vorliegen eines Synchronbitmusters hin überprüft. Es wird festgestellt, daß im Abschnitt 11 auch ein Bitmuster vorliegt, das dem Synchronbitmuster entspricht. Durch den Überprüfungsvorgang 27 wird nun ermittelt, ob dieses Bitmuster 11 einer fortlaufenden Folge von Synchronkennungen angehört. Mittels des Zählvorgangs 25 wird der vereinbarungsgemäße Abstand zweier Synchronkennungen abgezählt. An der Stelle 26 wird der Datenstrom 10 überprüft, wobei festgestellt wird, daß das Synchronbitmuster 12 vorliegt. Nach dem nachfolgenden Zählvorgang 28 wird wiederum festgestellt, daß das Synchronbitmuster 13 im vorgegebenen Abstand auftritt. Der Übereinstimmungszähler für diesen Überprüfungsvorgang 27 weist nunmehr den Wert "3" auf. Dies bedeutet, daß die Sychronbitmusterfolge 11, 12, 13, 14 gefunden ist. Um die Erkennungssicherheit zu erhöhen, kann die Entscheidungsschwelle des Zählvorgangs 27 von "3" auf höhere Schwellwerte erhöht werden.

Zwischen den Synchronbitmustern 12, 13 wird im Datenstrom 10 auch im Abschnitt 18 ein der Sychronkennung entsprechendes Bitmuster festgestellt. Es wird ein dritter, zeitparalleler Überprüfungsvorgang 31 mit einem ersten Zählvorgang 29 eingeleitet, der wiederum den Abstand von Datenbits zählt; nach diesem müßte eine Synchronkennung auftreten, sofern es sich um die Synchronbitmusterfolge handelt. An der Stelle 30 wird jedoch im Datenstrom kein Synchronbitmuster erkannt. Der zugeordnete Übereinstimmungszähler wird wieder auf "0" dekrementiert. Die Verfolgung dieser möglichen Synchronbitmusterfolge wird eingestellt.

Es wird also im Datenstrom 10 jede der auftretenden Synchronbitmusterfolgen, nämlich 16, 17 bzw. 11, 12, 13 bzw. 18 als mögliche Synchronbitmusterfolge verfolgt. Dabei wird festgestellt, ob tatsächlich die fortlaufende Synchronbitmusterfolge vorliegt. Dieses Vorliegen wird festgestellt, wenn das Synchronbitmuster im vorliegenden Beispiel mindestens dreimal im vorgeschriebenen Abstand aufgetreten ist.

In der praktischen Realisierung gemäß Figur 2 ist eine Vergleichseinrichtung 50 vorgesehen, durch die der empfangene Datenstrom DI, der dem Datenstrom 10 der Figur 1 entspricht, auf das Vorliegen der Synchronkennung, beispielsweise 47ₕₑₓ/B8ₕₑₓ überprüft wird. Hierzu wird ein Fenster von 8 Bit bitweise über den Datenstrom DI geschoben, und ein Impuls SF am Ausgang Synchronbytedetektors 50 jedesmal dann erzeugt, wenn ein Bitmuster entsprechend dem Synchronbitmuster erkannt wird. Im einzelnen enthält der Synchronbytedetektor 50 ein 8-Bit-Schieberegister 51, dem der Datenstrom DI zugeführt wird.

In einem Komparator 52 wird der Schieberegisterinhalt mit der Synchronkennung 47ₕₑₓ oder B8ₕₑₓ verglichen.

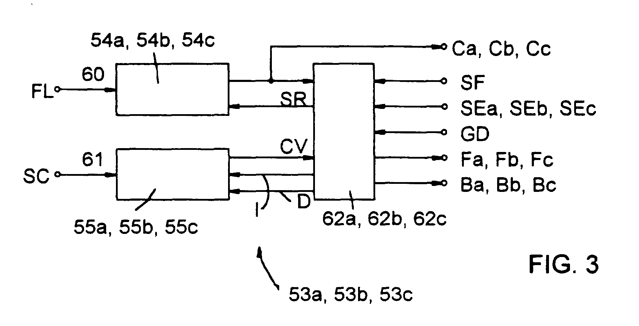

Zur Durchführung der Überprüfungsvorgänge 22, 27, 31 sind drei Synchronisationsschaltungen 53a, 53b, 53c vorgesehen. Jede der Synchronisationsschaltungen 53a, 53b, 53c enthält gemäß Figur 3 einen Zähler 54a, 54b bzw. 54c zum Zählen des vereinbarungsgemäßen Abstands zweier Synchronbitmuster im Datenstrom. Die Bezugszeichenanteile a, b, c geben an, daß der jeweilige in der Figur 3 für alle Synchronschaltungen nur einmal dargestellte Zähler der Synchronschaltung 53a, 53b oder 53c angehört. Der Zähler 54 zählt zweckmäßigerweise die Länge des Datenteils eines Synchronbitmuster und anschließenden Dateninhalt enthaltenden Datenpakets. Darüber hinaus ist in jeder Synchronisationsschaltung ein Übereinstimmungszähler 55a, 55b bzw. 55c vorgesehen, durch den das wiederholte Auftreten des Sychronbitmusters gezählt wird, wenn es im vorgegebenen Abstand der Paketlänge auftritt.

Eine Steuerungseinrichtung 58 sorgt für die Ablaufsteuerung der Schaltung. Die Steuerungseinrichtung 58 enthält eine Liste von freien, noch nicht aktivierten Synchronschaltungen 53a, 53b oder 53c. Nach einem vom Synchronbytedetektor 50 abgegebenen Impuls SF, der das Vorliegen eines Sychronbitmusters anzeigt, wird eine der freien Synchronschaltungen aktiviert. Nur dann, wenn einer der Rahmenlängenzähler 54a, 54b oder 54c seinen Zählvorgang gerade beendet hat und dies durch ein entsprechendes Signal Ca, Cb bzw. Cc anzeigt, wird nur in derjenigen Synchronisationsschaltung, in der der Rahmenzähler abgelaufen ist und das entsprechende Signal aktiviert hat, der Übereinstimmungszähler 55a, 55b oder 55c um +1 inkrementiert.

Im einzelnen erzeugen die Synchronisationsschaltungen 53a, 53b, 53c jeweils das Signal Ca, Cb bzw. Cc, wobei diese Signale über eine ODER-Verknüpfung 57 verknüpft werden. Das Ausgangssignal GD der ODER-Verknüpfung 57 dient dazu, daß nur in der das Signal GD erzeugenden Synchronisationsschaltung, nicht aber in den anderen Synchronisationsschaltungen der Synchronbytedetektorimpuls SF aufgenommen wird. Hierzu wird das Signal GD auf alle Synchronisationsschaltungen 53a, 53b, 53c rückgekoppelt. Aufgrund der synchron getakteten Betriebsweise der Schaltung ist auch die Rückkopplung des Signals GD auf diejenige Synchronisationsschaltung, die das Signal GD im Takt vorher erzeugt hat, konfliktfrei möglich. Es wird also sichergestellt, daß nur eine der Schaltungen 53a, 53b, 53c von einem Impuls des Signals SF gleichzeitig beeinfluß wird.

Von jeder der Synchronisationsschaltungen 53a, 53b, 53c wird ein Signal Ba, Bb bzw. Bc abgegeben, das angibt, daß die jeweilige Synchronisationsschaltung aktiviert ist, das heißt die Zählfunktion des dort enthaltenen Rahmen- oder Übereinstimmungszählers läuft. Die Steuerungseinrichtung 58 empfängt die Signale Ba, Bb, Bc, um die dort geführte Liste der freien Synchronisationsschaltungen zu aktualisieren. Wenn ein Synchronbytedetektorimpuls SF vorliegt und das Signal GD nicht gesetzt ist, bedeutet dies, daß eine Synchronkennung aufgetreten ist, ohne daß einer der Rahmenzähler seinen Zählvorgang gerade beendet hat. Dann gibt die Steuerung 58 über ein jeweiliges Startsignal SEa, SEb bzw. SEc eine bisher ruhende Synchronisationsschaltung zur Aktivierung frei, wobei der entsprechende Rahmenzähler aktiviert wird. Die Liste der freien Synchronisationsschaltungen in der Steuerungseinrichtung 58 wird entsprechend aktualisiert. Sind alle Synchronisationsschaltungen aktiv, wird keine weitere Synchronisationsschaltung gestartet. Sobald einer der Übereinstimmungszähler der Synchronisationsschaltungen 53a, 53b oder 53c seinen Schwellwert erreicht hat (im vorliegenden Beispiel "3") wird dies über ein entsprechendes Signal Fa, Fb bzw. Fc angezeigt. Diese Signale werden einer ODER-Verknüpfung 56 zugeführt, deren Ausgangssignal S angibt, daß die Folge der Synchronisationskennungen gefunden ist. Die die Schaltung der Figur 2 enthaltende Empfangseinrichtung kann nun die empfangene Datenfolge paketsynchron auswerten.

Jede der Synchronisationsschaltungen 53a, 53b, 53c wird durch die in Figur 3 dargestellte Schaltung realisiert. Dem Rahmenzähler 54 wird am Anschluß 60 die Rahmenlänge FL zugeführt. Der Zähler 54 zählt beginnend mit dem Zählerstand FL rückwärts zum Zählerstand "0". Sobald "0" erreicht ist, wird das Signal C abgegeben. Durch das Signal SR wird der Zähler 54 gestartet oder rückgesetzt. Dem Übereinstimmungszähler 55 wird am Anschluß 61 der Schwellwert SC zugeführt. Der Übereinstimmungszähler 55 zählt vom Zählerstand "0" bis zum Zählerstand SC und zeigt das Erreichen dieses Zählerstands durch ein Signal CV an. Die Zählrichtung des Übereinstimmungszählers 55 wird ihm über ein Signal I für Inkrementieren um "+1" bzw. ein Signal D für Inkrementieren um "-1" (Dekrementieren) angezeigt.

Innerhalb jeder Synchronisationsschaltung 53a, 53b, 53c wird der jeweilige Überprüfungsvorgang 22, 27 bzw. 31 durch ein Zustandsrechenwerk 62 gesteuert. Während des nicht aktivierten Ruhezustands überwacht das Zustandsrechenwerk 62 den Synchronbytedetektorimpuls SF. Wenn der Impuls SF gesetzt wird, werden die von der Steuerungseinrichtung 58 abgegebenen Signale SE und das von der ODER-Verknüpfung 56 abgegebene Signal GD ausgewertet. Ist das Signal SE aktiv und das Signal GD nicht aktiv, bedeutet dies, daß die Synchronisationsschaltung aktiviert wird, indem der Übereinstimmungszähler 55 inkrementiert wird und der Rahmenzähler 54 durch das Signal SR gestartet wird. Solange der Rahmenzähler 54 läuft, bleibt das Signal B aktiv. Ein weiterer auftretender Synchronbytedetektorimpuls SF wird in dieser Synchronisationsschaltung ignoriert. Wenn der Rahmenzähler die Rahmenlänge abgezählt hat, d. h. vom Zähleranfangsstand FL ausgehend den Wert "0" erreicht hat, und das Signal C gesetzt wird, wird das Signal für den Synchronbytedetektorimpuls SF getestet, wobei dieser Test gesteuert durch das Signal GD nur in derjenigen Synchronschaltung durchgeführt wird, die denjenigen Synchronzähler enthält, der das Signal C abgibt. Solange das Signal C in dieser Synchronschaltung aktiv ist, wird das ebenfalls eingespeiste Signal GD ignoriert. Ist der Synchrondetektorimpuls SF aktiv, wird der zugeordnete Übereinstimmungszähler der Synchronisationseinrichtung um "+1" inkrementiert und der Rahmenzähler 54 wird wieder gestartet. Ist der Synchrondetektorimpuls SF nicht aktiv, wird der zugeordnete Übereinstimmungszähler 55 dekrementiert. Sofern dessen Zählerstand größer als "0" ist, wird der Rahmenzähler wieder gestartet. Falls der Übereinstimmungszähler 55 den Zählerstand "0" aufweist, wird die Synchronisationsschaltung zurückgesetzt und deaktiviert, was durch das Signal B der Steuerungseinrichtung 58 mitgeteilt wird. Wenn der Übereinstimmungszähler 55 den Schwellwert SC erreicht und das Signal CV abgibt, wird das Signal F des zugeordneten Zustandsrechenwerks 62 gesetzt, so daß der Synchronisationszustand mittels des Signals S angezeigt wird. Der Synchronisationsvorgang ist beendet.

Zusammenfassend festgestellt, wird beim Start der in Figur 2 gezeigten Schaltung die Liste der freien Synchronisationsschaltungen in der Steuerungseinrichtung 58 initialisiert. Das Startfreigabesignal SEa für die erste Synchronisationsschaltung 53a wird gesetzt. Sobald das erste Synchronbytedetektorsignal SF beim Bitabschnitt 16 des Datenstroms 10 (Figur 1) auftritt, wird der Rahmenzähler 54a der Synchronisationsschaltung 53a gestartet und das Signal Ba gesetzt, welches angibt, daß die Synchronisationsschaltung 53a gerade aktiv ist. Die Steuerungseinrichtung 58 gibt nun mittels des Signals SEb die zweite Synchronisationsschaltung 53b frei. Sobald der nächste Synchronbytedetektorimpuls auftritt an der Bitstelle 11 des Datenstroms 10 (Figur 1), wird der Rahmenzähler 54b in der Synchronisationseinrichtung 53b gestartet. Das Verfahren wird fortgesetzt, bis eine der Synchronisationsschaltungen das Signal Fa, Fb oder Fc setzt. Danach werden von der Steuerungseinrichtung 58 die Freigabesignale SEa, SEb und SEc zurückgesetzt, um die Schaltung der Figur 2 wieder in den Ruhezustand überzuführen.

Im Ausführungsbeispiel der Figur 2 sind drei Synchronisationsschaltung 53 gezeigt, durch die drei zeitparallele Überprüfungsvorgänge durchgeführt werden können, in denen drei Rahmenzähler zeitparallel arbeiten. Prinzipiell sind auch nur zwei oder mehr als drei Synchronisationsschaltungen vorsehbar, die entsprechend dem in Figur 2 beschriebenen Arbeitsverfahren arbeiten. Bei einer Realisierung mit nur zwei Schaltungen 53a und 53b sind die Steuerungsmittel derart ausgeführt, daß der Übereinstimmungszähler 55 derjenigen Synchronisationsschaltung inkrementiert oder dekrementiert wird, deren Signal B gerade nicht aktiv ist. Dies entspricht einer Master-Slave-Beziehung der Synchronisationsschaltungen 53a und 53b, bei der die eine Synchronisationsschaltung die andere nur dann aktiviert, wenn das Signal B der ersteren aktiviert ist, d. h. der Rahmenzähler arbeitet.

In einer praktischen Realisierung zur Synchronisation auf eine eingangs genannte MPEG-Datenbitfolge mit zufallsverteilten Datenbits wurde mit zwei Auswerteschaltungen 53a, 53b, bei denen auf Synchronisation erkannt wurde, wenn einer der Zähler 55 einen Schwellwert von 3 erreicht hat (SC = 3), eine Synchronisation im Mittel nach bereits 8 Paketen erreicht. Im Vergleich zum Stand der Technik wurde wesentlich früher die Synchronbitmusterfolge erkannt. Es ergab sich eine wesentliche Verringerung der Synchronisationszeit und eine Verringerung der Anzahl der durch den Nichtsynchronisationszustand für die Weiterverarbeitung verlorenen Pakete von etwa 61 %. Bei mehr als zwei Synchronisationsschaltungen wird die Zeitdauer zur Einsynchronisation auf die Datenbitfolge erhöht.

## Patentansprüche

1. Verfahren zur Synchronisation auf eine Folge von digitalen Datenwerten (10), bei dem die Folge der Datenwerte in Abstand von einer vorgegebenen Anzahl von Datenwerten je eine Synchronkennung (11, 12, 13, 14, 15) enthält und bei dem nach dem Feststellen einer ersten Synchronkennung (16) die Datenwerte durch ein erstes Zahlmittel gezählt werden (20) und ein Ausgangssignal (S), das Synchronisation angibt, abhangig davon gesetzt wird, ob bei weiterem Erreichen der vorbestimmten Anzahl von Datenwerten wiederum eine Synchronkennung festgestellt wird,
**dadurch gekennzeichnet, daß**
nach dem Auftreten einer zweiten Synchronkennung (11), die nach der ersten Synchronkennung (16) stattfindet, die Datenwerte durch ein zweites Zählmittel gezählt werden und daß das Ausgangssignal dann gesetzt wird, wenn nachfolgend mindestens eine Synchronkennung (12, 13) nach der vorgegebenen Anzahl (25, 28) von Datenwerten, die von einem der Zählmittel gezählt worden ist, festgestellt wird.

2. Verfahren nach Anspruch 1,
**dadurch gekennzeichnet, daß**
das Ausgangssignal (S) erst dann gesetzt wird, wenn nach dem mehrfachen aufeinanderfolgenden Erreichen der vorgegebenen Anzahl (25, 28) von Datenwerten durch eines der Zählmittel je eine Synchronkennung (12, 13) festgestellt wird.

3. Verfahren nach Anspruch 2,
**dadurch gekennzeichnet, daß**
ein weiteres jeweils dem ersten und zweiten Zählmittel (54) zugeordnetes Zählmittel (55) inkrementiert wird, wenn beim Erreichen der vorgegebenen Anzahl von Datenwerten durch das jeweilige zugeordnete der ersten und zweiten Zählmittel eine Synchronkennung festgestellt wird, und daß das Ausgangssignal (S) gesetzt wird, wenn eines der weiteren Zählmittel (55) einen vorgegebenen Zählerstand ("3") erreicht hat.

4. Verfahren nach Anspruch 3,
**dadurch gekennzeichnet, daß**
jedes der weiteren Zahlmittel (55) in eine entgegengesetzte Richtung inkrementiert wird, wenn beim Erreichen der vorgegebenen Anzahl von Datenwerten durch das jeweils zugeordnete der ersten und zweiten Zählmittel (54) keine Synchronkennung festgestellt wird.

5. Schaltungsanordnung zur Durchführung des Verfahrens nach einem der Ansprüche 1 bis 4,
**gekennzeichnet durch**
eine erste das erste Zählmittel und mindestens eine zweite das zweite Zählmittel enthaltende Schaltung (53a, 53b, 53c) zur Feststellung des Vorliegens einer Synchronkennung (16, 11, 17, 12, 18, 13, 14, 15) nach dem Empfang der vorgegebenen Anzahl (20, 23, 24, 25, 28, 29) von Datenwerten, wobei **durch** die Zählmittel jeweils anzeigbar ist, daß die vorgegebene Anzahl (20, 23, 24, 25, 28, 29) von Datenwerten nach dem Feststellen einer Synchronkennung (16, 11, 17, 12, 18, 13, 14, 15) empfangen wurde, ein Vergleichsmittel (50), **durch** das feststellbar ist, ob in der Folge (10) der Datenwerte eine Synchronkennung enthalten ist, ein Steuerungsmittel (58), **durch** das das Feststellen der Synchronkennung **durch** das Vergleichsmittel (50) derjenigen Schaltung (53a, 53b, 53c) zuordenbar ist, deren Zählmittel (54) das Erreichen der vorgegebenen Anzahl von Datenwerten anzeigt, und ein Mittel (56) zur Abgabe des Ausgangssignals, wenn die genannte Zuordnung zu einer der Schaltungen mindestens ein Mal vorliegt, und **durch** jede der Schaltungen (53a, 53b, 53c) ein Signal (B) gesetzt wird, wenn die in ihr enthaltenen ersten bzw. zweiten Zählmittel (54) die Anzahl der empfangenen Datenwerte gerade zählen, und daß die Steuerungsmittel (58, 62) derart ausgeführt sind, daß beim Feststellen einer Synchronkennung nur eines derjenigen der ersten bzw. zweiten Zählmittel (54) im Zählvorgang gestartet wird, für das kein Signal (B) gesetzt ist.

6. Schaltungsanordnung nach Anspruch 5,
**dadurch gekennzeichnet, daß**
jede der Schaltungen (53a, 53b, 53c) eines der weiteren Zählmittel (55) aufweist, dessen Zählerstand um ein Inkrement in eine erste Richtung verändert wird, wenn das Vorliegen einer Synchronkennung nach dem Festellen der vorgegebenen Anzahl von Datenwerten durch das jeweilige erste Zählmittel (54) dieser Schaltung (53a, 53b bzw. 53c) festgestellt worden ist, und daß durch das Mittel (56) zur Abgabe des Ausgangssignals das Ausgangssignal dann setzbar ist, wenn mindestens eines der weiteren Zählmittel (55) der Schaltungen den vorgegebenen Zählerstand ("3") erreicht hat.

7. Schaltungsanordnung nach Anspruch 5 oder 6,
**dadurch gekennzeichnet, daß**
der Zählerstand des weiteren Zählmittels (55) einer der Schaltungen um ein Inkrement in eine entgegengesetzte zweite Richtung verändert wird, wenn das Vorliegen einer Synchronkennung nach dem Anzeigen der vorgegebenen Anzahl von Datenwerten durch das jeweilige erste bzw. zweite Zählmittel (54) dieser Schaltung nicht festgestellt worden ist, und daß das Signal (B) rückgesetzt wird, wenn der Zählerstand des weiteren Zählmittels wieder einen Ausgangszustand ("0") erreicht.

## Claims

1. Method for synchronization with a sequence of digital data values (10), in which the sequence of data values contains a respective synchronization identifier (11, 12, 13, 14, 15) at an interval of a prescribed number of data values and in which, after a first synchronization identifier (16) has been detected, the data values are counted (20) by a first counting means, and an output signal (S) indicating synchronization is set on the basis of whether a synchronization identifier is detected again when the predetermined number of data values is later reached,
**characterized in that**,
after a second synchronization identifier (11) occurring after the first synchronization identifier (16) has appeared, the data values are counted by a second counting means, and **in that** the output signal is set if, subsequently, at least one synchronization identifier (12, 13) is detected after the prescribed number (25, 28) of data values which has been counted by one of the counting means.

2. Method according to Claim 1,
**characterized in that**
the output signal (S) is set only if a respective synchronization identifier (12, 13) is detected after the prescribed number (25, 28) of data values has been reached successively a plurality of times by one of the counting means.

3. Method according to Claim 2,
**characterized in that**
a further counting means (55), respectively associated with the first and second counting means (54), is incremented if a synchronization identifier is detected when the prescribed number of data values is reached by the respective associated counting means among the first and second counting means, and **in that** the output signal (S) is set when one of the further counting means (55) has reached a prescribed count ("3").

4. Method according to Claim 3,
**characterized in that**
each of the further counting means (55) is incremented in an opposite direction if no synchronization identifier is detected when the prescribed number of data values is reached by the respectively associated counting means among the first and second counting means (54).

5. The circuit arrangement for carrying out the method according to one of Claims 1 to 4,
**characterized by**
a first and at least one second circuit (53a, 53b, 53c), the first circuit containing the first counting means and the second circuit containing the second counting means, for detecting the presence of a synchronization identifier (16, 11, 17, 12, 18, 13, 14, 15) after the prescribed number (20, 23, 24, 25, 28, 29) of data values has been received, where the counting means can respectively indicate that the prescribed number (20, 23, 24, 25, 28, 29) of data values has been received after a synchronization identifier (16, 11, 17, 12, 18, 13, 14, 15) has been detected, a comparison means (50) which makes it possible to detect whether the sequence (10) of data values contains a synchronization identifier, a control means (58) which makes it possible to associate the detection of the synchronization identifier by the comparison means (50) with that circuit (53a, 53b, 53c) whose counting means (54) indicates that the prescribed number of data values has been reached, and a means (56) for outputting the output signal if the said association with one of the circuits is present at least once and each of the circuits (53a, 53b, 53c) sets a signal (B) when the first and second counting means (54) they contain currently count the number of data values received, and in that the control means (58, 62) are designed such that, when a synchronization identifier is detected, only one of those of the first and second counting means (54) for which no signal (B) has been set is started in the counting operation.

6. Circuit arrangement according to Claim 5,
**characterized in that**
each of the circuits (53a, 53b, 53c) has one of the further counting means (55) whose count is changed by an increment in a first direction when the presence of a synchronization identifier has been detected after the prescribed number of data values has been detected by the respective first counting means (54) in this circuit (53a, 53b or 53c), and **in that** the means (56) for outputting the output signal is able to set the output signal when at least one of the further counting means (55) in the circuits has reached the prescribed count ("3").

7. Circuit arrangement according to Claim 5 or 6,
**characterized in that**
the count on the further counting means (55) in one of the circuits is changed by an increment in an opposite second direction if the presence of a synchronization identifier has not been detected after the prescribed number of data values has been indicated by the respective first or second counting means (54) in this circuit, and **in that** the signal (B) is reset when the count on the further counting means reaches an initial state ("0") again.

## Revendications

1. Procédé de synchronisation d'une séquence de valeurs de données numériques (10), dans lequel la séquence des valeurs de données numériques contient, à distance d'un nombre prédéterminé de valeurs de données, respectivement, un symbole de synchronisation (11, 12, 13, 14, 15) et dans lequel, après l'établissement d'un premier symbole de synchronisation (16), les valeurs de données sont comptées par un premier moyen de comptage (20) et un signal de sortie (S), qui indique une synchronisation, est activé en fonction du fait que, lorsque l'on atteint à nouveau le nombre déterminé de valeurs de données, il soit à nouveau établi un symbole de synchronisation, **caractérisé en ce que**, après l'apparition d'un deuxième symbole de synchronisation (11), qui se produit après le premier symbole de synchronisation (16), les valeurs de données sont comptées par un deuxième moyen de comptage et **en ce que** le signal de sortie est activé si, ensuite, il est établi au moins un symbole de synchronisation (12, 13) après le nombre déterminé (25, 28) de valeurs de données qui a été compté par l'un des moyens de comptage.

2. Procédé selon la revendication 1, **caractérisé en ce que** le signal de sortie (S) n'est activé que si, après avoir atteint successivement plusieurs fois le nombre prédéterminé (25, 28) de valeurs de données par l'un des moyens de comptage, il s'établit respectivement un symbole de synchronisation (12, 13).

3. Procédé selon la revendication 2, **caractérisé en ce qu'**un autre moyen de comptage (55) affecté respectivement au premier et au deuxième moyens de comptage (54) est incrémenté si, lorsqu'est atteint le nombre prédéterminé de valeurs de données par le premier et le deuxième moyens de comptage respectivement affectés, il est établi un symbole de synchronisation et **en ce que** le signal de sortie (S) est activé lorsque l'un des autres moyens de comptage (55) a atteint un état de comptage prédéterminé ("3").

4. Procédé selon la revendication 3, **caractérisé en ce que** chacun des autres moyens de comptage (55) est incrémenté dans un sens opposé si, lorsqu'est atteint le nombre prédéterminé de valeurs de données par le premier et le deuxième moyens de comptage respectivement affectés (54), il ne s'établit pas de symbole de synchronisation.

5. Aménagement de commutation pour réaliser le procédé selon l'une quelconque des revendications 1 à 4, **caractérisé par** un premier circuit contenant le premier moyen de comptage et au moins un deuxième circuit de commutation contenant le deuxième moyen de comptage (53a, 53b, 53c) pour établir la présence d'un symbole de synchronisation (16, 11, 17, 12, 18, 13, 14, 15) après la réception du nombre prédéterminé (20, 23, 24, 25, 28, 29) de valeurs de données, dans lequel les moyens de comptage peuvent respectivement indiquer que le nombre déterminé (20, 23, 24, 25, 28, 29) de valeurs de données a été reçu après l'établissement d'un symbole de synchronisation (16, 11, 17, 12, 18, 13, 14, 15), un moyen de comparaison (50), qui permet d'établir si, dans la séquence (10) des valeurs de données, est contenu un symbole de synchronisation, un moyen de commande (58), par lequel l'établissement du symbole de synchronisation peut être affecté par le moyen de comparaison (50) au circuit de commutation (53a, 53b, 53c), dont le moyen de comptage (54) affiche la présence du nombre prédéterminé de valeurs de données, et un moyen (56) pour délivrer le signal de sortie si l'affectation précitée à l'un des circuits se présente au moins une fois, un signal (B) étant activé par chacun des circuits ( 53a, 53b, 53c) lorsque le premier ou le deuxième moyen de comptage qui y est contenu (54) compte exactement le nombre des valeurs de données reçues, les moyens de commande (58, 62) étant réalisés de sorte que, lors de l'établissement d'un symbole de synchronisation, il n'y ait que l'un des premier ou deuxième moyens de comptage (54) qui soit lancé dans l'opération de comptage au cours de laquelle aucun signal (B) n'est activé.

6. Aménagement de commutation selon la revendication 5, **caractérisé en ce que** chacun des circuits (53a, 53b, 53c) présente l'un des autres moyens de comptage (55), dont l'état de comptage est modifié pour effectuer une incrémentation dans un premier sens, lorsque l'apparition d'un symbole de synchronisation a été établi après la fixation du nombre prédéterminé de valeurs de données par le premier moyen de comptage respectif (54) de ce circuit (53a, 53b ou 53c), et **en ce que** le moyen (56) permettant de délivrer le signal de sortie active le signal de sortie lorsqu'au moins l'un des autres moyens de comptage (55) des circuits a atteint l'état de comptage prédéterminé ("3").

7. Aménagement de commutation selon la revendication 5 ou 6, **caractérisé en ce que** l'état de comptage de l'autre moyen de comptage (55) d'un des circuits est modifié d'un incrément dans un deuxième sens opposé lorsque la présence d'un symbole de synchronisation, après l'affichage du comptage prédéterminé de valeurs de données par le premier ou le deuxième moyen de comptage respectif (54) de ce circuit, n'a pas été établie, et **en ce que** le signal (B) est ramené à zéro lorsque l'état de comptage de l'autre moyen de comptage atteint à nouveau une position de départ ("0").
